# EUROPÄISCHE PATENTSCHRIFT

(11) **EP 3 299 199 B1**
(45) Veröffentlichungstag und Bekanntmachung des Hinweises auf die Patenterteilung: **06.11.2019**
(21) Anmeldenummer: 17001582.0
(22) Anmeldetag: 22.09.2017
(51) Int. Cl.: B60J 10/18, B60J 10/33

(54) **DICHTUNGSSTRANG ZUR BILDUNG EINER DICHTUNG AN EINER FAHRZEUGKAROSSERIE**
SEALING STRIP FOR FORMING A SEAL ON A VEHICLE BODY
PROFILÉ D'ÉTANCHÉITÉ PERMETTANT LA FORMATION D'UN JOINT D'ÉTANCHÉITÉ D'UNE CARROSSERIE DE VÉHICULE

(30) Priorität: 26.09.2016 DE 102016118111
(43) Veröffentlichungstag der Anmeldung: 28.03.2018
(73) Patentinhaber: CQLT SaarGummi Technologies S.à.r.l., 5544 Remich (LU)
(72) Erfinder: Thiel, Daniel, 66701 Beckingen (DE); Jungmann, Thomas, 66701 Beckingen (DE)
(74) Vertreter: Patentanwälte Bernhardt / Wolff Partnerschaft mbB

(56) Entgegenhaltungen:
- EP-A1- 0 607 813
- WO-A1-2016/121426
- DE-A1- 1 430 497
- DE-A1- 3 400 038
- DE-A1- 3 925 039
- DE-T2- 69 010 934
- US-A- 5 085 006

## Beschreibung

Die Erfindung betrifft einen Dichtungsstrang zur Bildung einer Dichtung an einer Fahrzeugkarosserie, insbesondere zur Abdichtung einer Fahrzeugfensterscheibe an einem Fensterschacht, wobei der Dichtungsstrang über U-Schenkel eines im Querschnitt U-förmigen Befestigungsabschnitts mit einem in Stranglängsrichtung verlaufenden Flansch an der Fahrzeugkarosserie verklemmbar ist, der Befestigungsabschnitt eine U-förmige, in das Material des Befestigungsabschnitts eingebettete Verstärkungseinlage aufweist und in wenigstens einem vorgegebenen Längenabschnitt des Dichtungsstrangs, der einem Längenabschnitt des Flansches mit verringerter Flanschdicke entspricht, die Klemmweite zwischen den U-Schenkeln verringert ist.

Zur Verklemmung mit Dichtungssträngen vorgesehene Flansche an Fahrzeugkarosserien sind überwiegend aus mehreren, ggf. miteinander verbundenen Blechlagen gebildet. Je nach Karosseriekonstruktion kann ein solcher Karosserieflansch jedoch wenigstens einen Längenabschnitt aufweisen, in dem zumindest eine dieser Blechlagen entfällt und die Flanschdicke dementsprechend reduziert ist. Die Stabilität der Klemmverbindung zwischen einem extrudierten Dichtungsstrang, der einen über seine gesamte Länge gleichbleibenden Querschnitt aufweist, kann in solchen Längenabschnitten reduzierter Flanschdicke daher erheblich beeinträchtigt sein. Dem wird z.B. durch plastische Verformung des Dichtungsstrangs in den betreffenden Längenabschnitten unter Verringerung des Abstandes zwischen den U-Schenkeln entgegengewirkt.

Die DE 34 00 038 A1 und die US 5 085 006 A beschreiben jeweils Dichtungsstränge der eingangs erwähnten Art, bei denen eine Verringerung der Klemmweite in Längenabschnitten des Flansches mit verringerter Flanschdicke dadurch erreicht wird, dass nach innen von den U-Schenkeln des U-förmigen Dichtungsabschnitts abstehende Klemmlippen verlängert sind.

Die DE 690 10 934 T2 beschreibt einen Dichtungsstrang mit einem U-förmigen Befestigungsabschnitt, der eine nach innen freiliegende Lage aus Blech aufweist und der über Klemmvorsprünge bildende Einformungen klemmend an einem Karosserieflansch anliegt.

Aus WO 2016/121426 A1 ist ein Herstellungsverfahren für einen Dichtungsstrang mit einem im Querschnitt U-förmigen Befestigungsabschnitt bekannt, wobei ein Schenkel des Befestigungsabschnitts in einem Längsabschnitt des Dichtungsstrangs in Richtung eines gegenüberliegenden Schenkels dauerhaft verformt wird.

DE 39 25 039 A1 offenbart eine Dichtleiste zur Anordnung auf einem Flansch.

Durch die Erfindung wird ein neuer Dichtungsstrang der eingangs genannten Art geschaffen, der dadurch gekennzeichnet ist, dass die Einformung durch einen eine Lasche in dem U-Schenkel bildenden Einschnitt und Abbiegung der Lasche nach innen gebildet ist, so dass die Lasche zu dem anderen U-Schenkel hin vorsteht, oder die Einformung durch zwei vorzugsweise parallele, im Abstand zueinander angeordnete Einschnitte in den U-Schenkel und durch Eindrücken eines Bereichs zwischen den Einschnitten nach innen gebildet ist oder die Einformung durch eine in den U-Schenkel eingebrachte Einprägung gebildet ist. Vorteilhaft wird in letzterem Fall die dauerhaft verformte Verstärkungseinlage nicht freigelegt, so dass keinerlei Korrosionsgefahr besteht.

Die Klemmweite ist dabei innerhalb des Längenabschnitts nur durch in Stranglängsrichtung lokale Einformungen von wenigstens einem der U-Schenkel gebildet und die Außenkontur des Querschnitts des Dichtungsstrangs nur durch die lokale Einformung verändert.

Vorteilhaft lässt sich durch diese Erfindungslösung eine Minderung der Klemmkraft zwischen Dichtungsstrang und Flansch in Abschnitten verringerter Flanschdicke ohne nennenswerte Änderung der äußeren Form des Dichtungsstrangs in dem betreffenden Längenabschnitt ausgleichen.

Bei dem Dichtungsstrang handelt es sich um einen extrudierten Dichtungsstrang mit einer in Stranglängsrichtung, ggf. bis auf die lokale Einbuchtung, gleichbleibenden Querschnittsfläche.

Der U-förmige Befestigungsabschnitt weist eine Verstärkungseinlage in U-Form aus durchgehendem, in die U-Form gebogenem Blech auf.

Durch die die lokale Verringerung bildende Einformung des U-Schenkels ist das Blech der Verstärkungseinlage dauerhaft verformt.

In einer zu den vorangehenden Ausführungsformen alternativen Ausführungsform ist die Verringerung der Klemmweite durch Materialauftrag auf die Innenseite von wenigstens einem der U-Schenkel gebildet.

Eine Materialbeaufschlagung kann sich alternativ über die gesamte Länge des genannten Längenabschnitts erstrecken und z.B. durch einen mit dem U-Schenkel innenseitig verbundenen Materialstreifen gebildet sein.

Es versteht sich, dass die Einformung vorzugsweise denjenigen U-Schenkel betrifft, der sich bei Wegfall einer Blechlage des Flansches im Abstand zu der verbliebenen Blechlage befindet. Somit kommt es am Übergang zu dem betreffenden Längenabschnitt nicht zu einem Versatz oder/und einer Verdrehung des Dichtungsstrangs. Verbleibt nur eine mittlere Blechlage von drei Blechlagen, so kommt für beide U-Schenkel eine Einformung in Betracht.

Die Erfindung wird nachfolgend anhand von Ausführungsbeispielen und der beiliegenden, sich auf diese Ausführungsbeispiele beziehenden Zeichnungen weiter erläutert. Es zeigen:
- Fig. 1: einen Dichtungsstrang zur Abdichtung einer Fahrzeugfensterscheibe, der an einem Fensterschacht angeordnet ist,
- Fig. 2: eine Querschnittsdarstellung der Dichtungsanordnung von Fig. 1,
- Fig. 3: eine weitere Querschnittsdarstellung der Dichtungsanordnung von Fig. 1 in einem Endbereich des Dichtungsstrangs,
- Fig. 4 und 5: ein erstes Ausführungsbeispiel für einen erfindungsgemäßen Dichtungsstrang in perspektivischer Darstellung bzw. in Querschnittsdarstellung, und
- Fig. 6 und 7: weitere Ausführungsbeispiele für Dichtungsstränge nach der Erfindung.

Eine Fensterscheibe 1 ist an einem Fensterscheibenschacht 2 einer Fahrzeugkarosserie 3 durch einen annähernd geraden Dichtungsstrang 4 abgedichtet. Der vorzugsweise extrudierte Dichtungsstrang kann z.B. aus EPDM oder einem Thermoplast hergestellt sein.

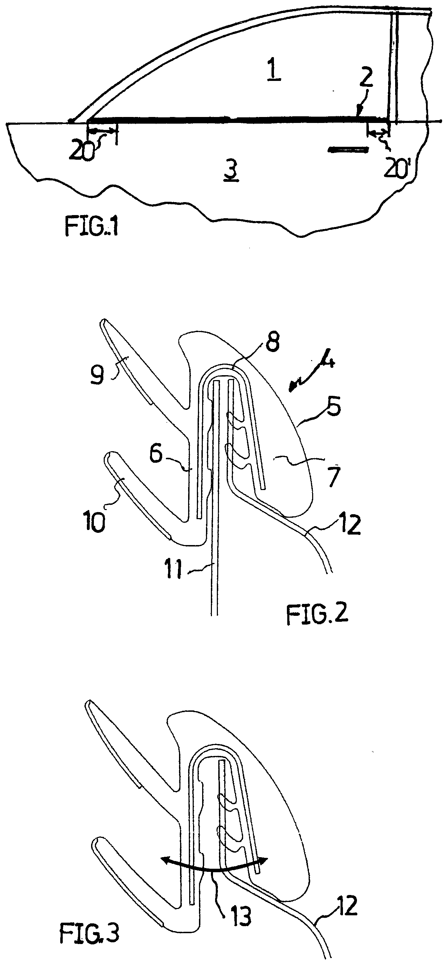

Gemäß Querschnittsdarstellung von Fig. 2 weist der Dichtungsstrang 4 einen U-förmigen Befestigungsabschnitt 5 mit U-Schenkeln 6 und 7 und einer metallischen Verstärkungseinlage 8 in U-Form auf. Von dem U-Schenkel 6 stehen Dichtungslippen 9 und 10 ab.

Wie Fig. 2 ferner erkennen lässt, ist der Dichtungsstrang 4 mit seinem U-förmigen Befestigungsabschnitt 5 auf einen aus Blechlagen 11 und 12 gebildeten (in Fig. 1 nicht sichtbaren) Flansch der Karosserie 3 aufgesteckt.

Jeweils in Endabschnitten 20,20' des in Fig. 1 als Beispiel gezeigten Dichtungsstrangs 4 ist die Dicke des Karosserieflansches verringert, indem den Karosserieflansch in diesen Endabschnitten nur noch die Blechlage 12 bildet. Nachteilig ist in den Endabschnitten 20,20' die Verbindung zwischen dem Dichtungsstrang 4 und dem Karosserieflansch infolge unangepasster Klemmweite des Befestigungsabschnitts 5 instabil. Insbesondere lässt sich der Dichtungsstrang 4 gemäß Pfeil 13 verkippen, wie dies aus Fig. 3 hervorgeht.

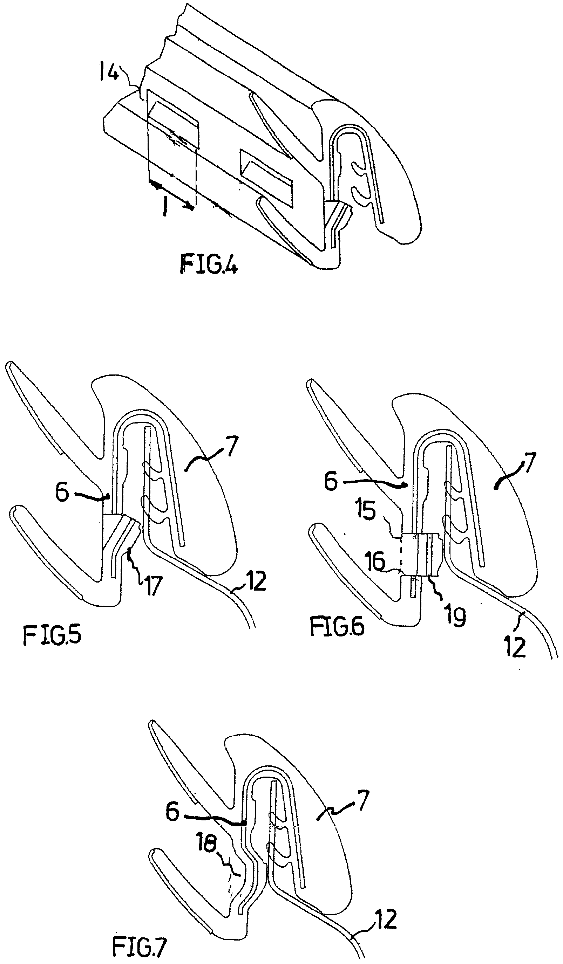

Fig. 4 und 5 zeigen ein erstes, dieses Problem lösendes Ausführungsbeispiel für einen Dichtungsstrang. Der Dichtungsstrang weist in den betreffenden Endabschnitten lokale, die Klemmweite der U-Schenkel 6,7 verringernde Einformungen auf. In Stranglängsrichtung jeweils über eine Länge I ist der U-Schenkel 6 einschließlich der Verstärkungseinlage 8 an mehreren Stellen laschenartig eingeschnitten und die durch den Einschnitt 14 gebildete Lasche 17 nach innen abgebogen. In dem gezeigten Beispiel besteht die Verstärkungseinlage 8 aus Aluminium, dessen Freilegung durch die Einschnitte 14 keine nennenswerten Korrosionsprobleme verursacht.

In einer in Fig. 6 gezeigten Ausführungsform sind in dem U-Schenkel 6 jeweils zwei, zueinander parallele Einschnitte 15 und 16 gebildet, und der Bereich zwischen den Einschnitten 15,16 ist unter Bildung einer gegen den U-Schenkel 7 bügelartig vorstehenden Einbuchtung 19 eingedrückt. Auch in dem Ausführungsbeispiel von Fig. 6 besteht die Verstärkungseinlage 8 aus Aluminium.

Ein in Fig. 7 gezeigtes Ausführungsbeispiel weist keine Einschnitte sondern lediglich lokale Einprägungen 18 auf, durch welche die Klemmweite zwischen den U-Schenkeln 6 und 7 lokal verringert und an die verringerte Dicke des Karosserieflanschs angepasst ist.

In allen beschriebenen Fällen bleibt im Bereich der nur lokalen Einformungen des Dichtungsstrangs dessen Querschnittsaußenkontur in der Hauptsache erhalten. Die Klemmweite verringerte Einformungen sind in den gezeigten Ausführungsbeispielen in dem U-Schenkel 6 gebildet, welcher außerhalb der Endabschnitte 20,20' an die Blechlage 11 angrenzt. Vorteilhaft kommt es am Übergang zu den Endabschnitten 20,20' daher nicht zu einem Versatz des Dichtungsstrangs quer zur Stranglängsrichtung, sondern der Dichtungsstrang tritt ohne äußere Verformung in die Endabschnitte 20,20' über.

Es versteht sich, dass die Anzahl der Einformungen sowie ihre Ausdehnungen in Stranglängs- und Umfangsrichtung den Anforderungen des Anwendungsfalls entsprechend ausgewählt werden können.

## Patentansprüche

1. Dichtungsstrang zur Bildung einer Dichtung an einer Fahrzeugkarosserie (3), insbesondere zur Abdichtung einer Fahrzeugfensterscheibe (1) an einem Fensterschacht (2), wobei der Dichtungsstrang (4) über U-Schenkel (6,7) eines im Querschnitt U-förmigen Befestigungsabschnitts (5) mit einem in Stranglängsrichtung verlaufenden Flansch (11,12) an der Fahrzeugkarosserie (3) verklemmbar ist, der Befestigungsabschnitt (5) eine U-förmige, in das Material des Befestigungsabschnitts (5) eingebettete Verstärkungseinlage (8) aufweist und in wenigstens einem vorgegebenen Längenabschnitt (20,20') des Dichtungsstrangs, der einem Längenabschnitt des Flansches (11,12) mit verringerter Flanschdicke entspricht, die Klemmweite zwischen den U-Schenkeln (6,7) verringert ist, wobei die verringerte Klemmweite innerhalb des Längenabschnitts (20,20') nur durch in Stranglängsrichtung lokale Einformungen von wenigstens einem der U-Schenkel (6,7) gebildet und die Außenkontur des Querschnitts des Dichtungsstrangs nur durch die lokale Einformung verändert ist, der Dichtungsstrang (4) ein extrudierter Dichtungsstrang mit in Stranglängsrichtung bis auf die lokale Einformung, gleichbleibender Querschnittsfläche ist, die Verstärkungseinlage (8) aus in Stranglängsrichtung durchgehendem, zu der U-Form gebogenem Blech hergestellt ist und in der Einformung des U-Schenkels (6) das Blech der Verstärkungseinlage (8) dauerhaft verformt ist,
**dadurch gekennzeichnet,**
**dass** die Einformung durch einen eine Lasche (17) in dem U-Schenkel (6) bildenden Einschnitt (14) und Abbiegung der Lasche (17) nach innen oder die Einformung durch zwei zueinander im Abstand angeordnete Einschnitte (15,16) in den U-Schenkel (6) und durch Eindrücken eines Bereichs zwischen den Einschnitten (15,16) nach innen oder die Einformung in dem U-Schenkel (6) durch eine in den U-Schenkel (6) eingebrachte Einprägung (18) gebildet ist.

2. Dichtungsstrang nach Anspruch 1,
**dadurch gekennzeichnet,**
**dass** eine Verringerung der Klemmweite durch Materialauftrag auf die Innenseite von wenigstens einem der U-Schenkel gebildet ist.

## Claims

1. Sealing strip for the formation of a seal on a vehicle body (3), in particular for sealing a vehicle window pane (1) on a window well (2), it being possible for the sealing strip (4) to be clamped on the vehicle body (3) via U-limbs (6, 7) of a fastening section (5) of U-shaped cross section with a flange (11, 12) which runs in the strip longitudinal direction, the fastening section (5) having a U-shaped reinforcing insert (8) which is embedded into the material of the fastening section (5), and the clamping width between the U-limbs (6, 7) being reduced in at least one predefined length section (20, 20') of the sealing strip which corresponds to a length section of the flange (11, 12) with a reduced flange thickness, the reduced clamping width within the length section (20, 20') being formed merely by way of local, in the strip longitudinal direction, formed recesses of at least one of the U-limbs (6, 7), and the outer contour of the cross section of the sealing strip being changed merely by way of the local formed recess, the sealing strip (4) being an extruded sealing strip with a constant cross-sectional area in the strip longitudinal direction apart from the local formed recess, the reinforcing insert (8) being formed from a metal sheet which is continuous in the strip longitudinal direction and is curved to form the U-shape, and the metal sheet of the reinforcing insert (8) being deformed permanently in the formed recess of the U-limb (6), **characterized in that** the formed recess is formed by way of an indent (14) which forms a tab (17) in the U-limb (6) and bending over of the tab (17) inwards, or the formed recess is formed by way of two indents (15, 16) which are arranged at a spacing from one another in the U-limb (6) and by way of pressing in of a region between the indents (15, 16) inwards, or the formed recess is formed in the U-limb (6) by way of a stamped formation (18) which is made in the U-limb (6).

2. Sealing strip according to Claim 1, **characterized in that** a reduction of the clamping width is formed by way of the application of material to the inner side of at least one of the U-limbs.

## Revendications

1. Profilé d'étanchéité pour former un joint d'étanchéité au niveau d'une carrosserie de véhicule (3), en particulier pour la fermeture étanche d'une vitre de véhicule (1) au niveau d'un puits de fenêtre (2), le profilé d'étanchéité (4) pouvant être fixé par serrage via des branches en U (6,7) d'une section de fixation (5) présentant une forme de U en coupe transversale à l'aide d'une bride (11,12) s'étendant dans la direction longitudinale du profilé sur la carrosserie de véhicule (3), la section de fixation (5) présentant un insert de renforcement (8) en forme de U, incorporé dans la matière de la section de fixation (5) et la largeur de serrage entre les branches en U (6,7) étant réduite dans au moins une section longitudinale prédéfinie (20,20') du profilé d'étanchéité qui correspond à une section longitudinale de la bride (11,12) présentant une épaisseur de bride réduite, la largeur de serrage réduite dans la section longitudinale (20,20') n'étant formée que par des creux locals dans la direction longitudinale du profilé d'au moins l'une des branches en U (6,7) et le contour externe de la coupe transversale du profilé d'étanchéité n'étant modifié que par le creux local, le profilé d'étanchéité (4) étant un profilé d'étanchéité extrudé présentant une surface transversale identique dans la direction longitudinale du profilé à l'exception du creux local, l'insert de renforcement (8) étant formé par une tôle continue dans la direction longitudinale du profilé et cintrée en forme de U et la tôle de l'insert de renforcement (8) étant déformée de manière permanente dans le creux de la branche en U (6), **caractérisé en ce que** le creux est formé par une encoche (14) formant une patte (17) dans la branche en U (6) et par courbure de la patte (17) vers l'intérieur ou le creux est formé par deux encoches (15,16) disposées à une certaine distance l'une de l'autre dans la branche en U (6) et par enfoncement d'une zone entre les encoches (15,16) vers l'intérieur ou le creux dans la branche en U (6) est formé par un gaufrage (18) réalisé dans la branche en U (6).

2. Profilé d'étanchéité selon la revendication 1, **caractérisé en ce que** la diminution de la largeur de serrage est formée par une application de matière sur la face interne d'au moins l'une des branches en U.
